# EUROPEAN PATENT SPECIFICATION

(11) **EP 2 562 947 B1**
(45) Date of publication and mention of the grant of the patent: **20.01.2016**
(21) Application number: 11791869.8
(22) Date of filing: 27.04.2011
(51) Int. Cl.: H04B 10/272, H04J 3/16, H04J 14/00

(54) **METHOD, APPARATUS AND SYSTEM FOR PASSIVE OPTICAL NETWORK COMMUNICATION**
VERFAHREN, VORRICHTUNG UND SYSTEM ZUR KOMMUNIKATION ÜBER EIN PASSIVES OPTISCHES NETZWERK
PROCÉDÉ, DISPOSITIF ET SYSTÈME DE COMMUNICATION POUR RÉSEAU OPTIQUE PASSIF

(30) Priority: 10.06.2010 CN 201010196821
(43) Date of publication of application: 27.02.2013
(73) Proprietor: Huawei Technologies Co., Ltd., Longgang District Shenzhen, Guangdong 518129 (CN)
(72) Inventor: HU, Xing, Guangdong 518129 (CN); ZHOU, Jianlin, Guangdong 518129 (CN); CAO, Yang, Guangdong 518129 (CN)
(74) Representative: Goddar, Heinz J.
(86) International application number: PCT/CN2011/073389
(87) International publication number: WO 2011/153878

(56) References cited:
- EP-A1- 2 262 133
- CN-A- 1 921 357
- CN-A- 101 202 603
- US-A1- 2006 002 706
- US-A1- 2009 136 230
- US-A1- 2009 297 162

## Description

### FIELD OF THE INVENTION

The present invention relates to the field of communications, and in particular, to a communication method, apparatus and system for a passive optical network.

### BACKGROUND OF THE INVENTION

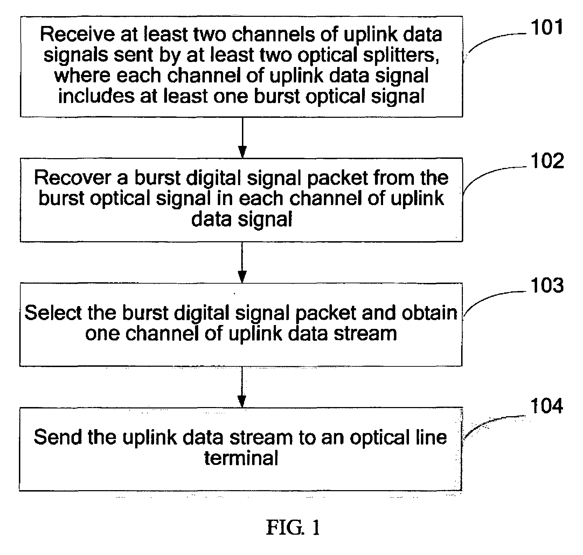

With the rise of emerging services such as video on demand, high definition television, and online games, a user's need for a bandwidth grows increasingly, and the development of Fiber to the Home (Fiber to the Home, FTTH) may effectively ensure a "last mile" access network bandwidth. A passive optical network (Passive Optical Network, PON) technology is one of the most widely used FTTH technologies at present. FIG 1 shows conventional network architecture using PON access, where multiple services of the user are transmitted through PON access and a transport network, so as to be flexibly connected to different telecommunications service nodes. It can be seen from FIG 1 that, basic constitution of a PON system includes an optical line terminal (Optical Line Terminals, OLT), a passive optical splitter (Splitter) and an optical network unit (Optical Network Unit, ONU). The OLT is connected to the passive optical splitter through a backbone optical fiber. The optical splitter implements point-to-multipoint optical power allocation, and is connected to multiple ONUs through multiple branch optical fibers. The backbone optical fiber, the optical splitter and the branch optical fibers between the OLT and the ONUs are referred to as an optical distribution network (Optical Distribution Network, ODN). A direction from the ONU to the OLT is referred to as an uplink direction, and a direction from the OLT to the ONU is referred to as a downlink direction.

A communication manner of the PON system in the prior art is that, the multiple ONUs transport user data to the optical splitter through the branch optical fibers, and the optical splitter sends the data in the multiple branch optical fibers to the OLT through one backbone optical fiber. Because one OLT only has one receiving port, one OLT can only receive user data from one optical distribution network ODN, that is, the OLT and the ODN (or the optical splitter) are in one-to-one correspondence.

EP 2262133A1 which forms prior art under Art. 54(3) EPC discloses a PON extender. The PON extender includes: an optical amplifier, adapted to compensate optical power for PON signals in a downlink channel; an optical control switch, connected with an ONU and adapted to extract overhead information of the PON signals in the downlink channel, and select one channel of ONU uplink signals as output uplink channel PON signals according to the extracted overhead information; and a regenerating device, adapted to regenerate optical signals for the uplink channel PON signals output under control of the optical control switch.

US 2009/0136230 A1 discloses a system and method for managing wavelength drift in an optical network. In a particular embodiment, the method includes receiving traffic in one or more optical channels transmitted by one or more transmitters, each channel having successive timeslots, each transmitter assigned to transmit in a channel in allocated timeslots in the channel. The method also includes determining whether the traffic received in a particular channel in a particular timeslot was transmitted by one of the transmitters that was not assigned to transmit in the particular channel. The method further includes, if the traffic in the particular channel was transmitted by one of the transmitters that was not assigned to transmit in the particular channel, identifying the transmitter that was not assigned to transmit but that did transmit in the particular channel, assigning the identified transmitter to transmit in the particular channel, and allocating timeslots in the particular channel to the identified transmitter.

The prior art has the following disadvantages, in the existing communication method of the PON system, because the number of the ONUs that can access one optical distribution network is limited (a maximum access number is 128 at present), to cover more users, a digital subscriber line (Digital Subscriber Line, DSL) device or switch device has to be added between the ONUs and the users. The DSL device and the switch device are both non-PON devices. This method increases the cost of investment on the network, and results in high operation and maintenance cost for an operator.

### SUMMARY OF THE INVENTION

Embodiments of the present invention provide a communication method, apparatus and system for a passive optical network, so as to cover more users without increasing non-PON devices, thereby reducing the cost for network operation and maintenance of an operator.

In order to achieve the foregoing objectives, the embodiments of the present invention adopt the following technical solutions.

A communication method for a passive optical network includes:
receiving at least two channels of uplink data signals sent by at least two optical splitters, where each channel of uplink data signal includes at least one burst optical signal;
recovering a burst digital signal packet from a burst optical signal in each channel of uplink data signal;
selecting the burst digital signal packet and obtaining one channel of uplink data stream; and
sending the uplink data stream to an optical line terminal;
wherein the selecting the burst digital signal packet and obtaining the one channel of uplink data stream comprises:
   performing packet header detection on the burst digital signal packet in each channel of uplink data signal;
   when detecting a packet header of the burst digital signal packet in each channel of uplink data signal, generating an indication signal;
   selecting and outputting the burst digital signal packet in each channel of uplink data signal according to the indication signal, and obtaining one channel of electrical signal data stream, wherein the electrical signal data stream includes the selected at least one burst digital signal packet; and
   performing electro-optical conversion on the electrical signal data stream, and obtaining the one channel of uplink data stream.

A communication apparatus for a passive optical network includes:
a first receiving unit, configured to receive at least two channels of uplink data signals where each channel of uplink data signal includes at least one burst optical signal;
a recovering unit, configured to recover a burst digital signal packet from a burst optical signal in each channel of uplink data signal received by the first receiving unit;
a selecting unit, configured to select the burst digital signal packet recovered by the recovering unit and obtain one channel of uplink data stream; and
a first sending unit, configured to send the one channel of uplink data stream output by the selecting unit to an optical line terminal;
wherein the selecting unit comprises:
   a packet header detecting unit, configured to perform packet header detection on the burst digital signal packet in each channel of uplink data signal recovered by the recovering unit;
   a signal generating unit, configured to, when the packet header detecting unit detects a packet header of the burst digital signal packet in each channel of uplink data signal, generate an indication signal;
   a selecting subunit, configured to select and output the burst digital signal packet in each channel of uplink data signal according to the indication signal generated by the signal generating unit, and obtain one channel of electrical signal data stream; and
   a first converting unit, configured to perform electro-optical conversion on the electrical signal data stream selected by the selecting subunit, and obtain the one channel of uplink data stream.

A communication system for a passive optical network includes:
at least two optical splitters, where each optical splitter is connected to at least one optical network unit, and configured to receive burst optical signals sent by the optical network unit and combine the burst optical signals into one channel of uplink data signal;
a data processing module, connected to the at least two optical splitters, and configured to receive at least two channels of uplink data signals sent by the at least two optical splitters; recover a burst digital signal packet from a burst optical signal in each channel of uplink data signal; select the burst digital signal packet and obtain one channel of uplink data stream; and send the uplink data stream to an optical line terminal; wherein the selecting the burst digital signal packet and obtaining the one channel of uplink data stream comprises: performing packet header detection on the burst digital signal packet in each channel of uplink data signal; when detecting a packet header of the burst digital signal packet in each channel of uplink data signal, generating an indication signal; selecting and outputting the burst digital signal packet in each channel of uplink data signal according to the indication signal, and obtaining one channel of electrical signal data stream, wherein the electrical signal data stream includes the selected at least one burst digital signal packet; and performing electro-optical conversion on the electrical signal data stream, and obtaining the one channel of uplink data stream; and
the optical line terminal, connected to the data processing module, and configured to receive the one channel of uplink data stream sent by the data processing module, parse the uplink data stream, and send a parsed uplink data stream to a target network.

According to the communication method, apparatus and system for the passive optical network provided in the embodiments of the present invention, the number of the optical splitters is increased, the burst digital signal packet is recovered from the burst optical signal in the data signal sent by each optical splitter, these digital signal packets are selected and combined into one channel of uplink data stream, and the uplink data stream is transported to the optical line terminal, so that the optical line terminal and the optical splitter are no longer in one-to-one correspondence, thereby increasing the number of the ONUs accessing the passive optical network system to a maximum extent. The communication method, apparatus and system for the passive optical network provided in the embodiments of the present invention can cover more users without increasing the non-PON devices, thereby reducing the cost for network operation and maintenance of an operator.

### BRIEF DESCRIPTION OF THE DRAWINGS

To illustrate the technical solutions according to embodiments of the present invention or in the prior art more clearly, accompanying drawings for describing the embodiments or the prior art are introduced briefly in the following. Obviously, the accompanying drawings in the following descriptions are some embodiments of the present invention, and persons of ordinary skill in the art may obtain other drawings from the accompanying drawings without making creative efforts.
FIG. 1 is a flow chart of a communication method for a passive optical network according to an embodiment of the present invention;
FIG. 2 is a flow chart of a communication method for a passive optical network according to another embodiment of the present invention;
FIG. 3 is a schematic diagram of a functional state of combining multiple uplink data signals into one channel of uplink data stream according to an embodiment of the present invention;
FIG. 4 is a first schematic structural diagram of a communication apparatus for a passive optical network according to an embodiment of the present invention;
FIG. 5 is a schematic structural diagram of a selecting unit 303 in the communication apparatus for the passive optical network shown in FIG. 4;
FIG 6 is a schematic structural diagram of a recovering unit 302 in the communication apparatus for the passive optical network shown in FIG 4;
FIG 7 is a second schematic structural diagram of the communication apparatus for a passive optical network according to an embodiment of the present invention;
FIG. 8 is a schematic structural diagram of physical modules corresponding to the communication apparatus for a passive optical network according to an embodiment of the present invention;
FIG 9 is a schematic structural diagram of the physical modules corresponding to the communication apparatus for a passive optical network according to an embodiment of the present invention, when applied to a long-reach PON system; and
FIG. 10 is a schematic structural diagram of a communication system for a passive optical network according to an embodiment of the present invention.

### DETAILED DESCRIPTION OF THE EMBODIMENTS

In order to make the objectives, technical solutions, and advantages of the present invention more clear, the technical solutions according to embodiments of the present invention are clearly and completely described in the following with reference to the accompanying drawings. Obviously, the embodiments in the following descriptions are merely part of rather than all of the embodiments of the present invention. All other embodiments obtained by persons of ordinary skill in the art based on the embodiments of the present invention without making creative efforts shall fall within the protection scope of the present invention.

To solve a problem in the prior art that a high cost for network operation and maintenance is caused by a need of increasing non-PON devices to cover more users, the embodiments of the present invention provide a communication method, apparatus and system for a passive optical network.

Referring to FIG. 1, an embodiment of the present invention provides a communication method for a passive optical network, including:
Step 101 : Receive at least two channels of uplink data signals sent by at least two optical splitters, where each channel of uplink data signal includes at least one burst optical signal.
Step 102: Recover a burst digital signal packet from the burst optical signal in each channel of uplink data signal.
Step 103: Select the burst digital signal packet and obtain one channel of uplink data stream.
Step 104: Send the uplink data stream to an optical line terminal.

According to the communication method for the passive optical network provided in the embodiment of the present invention, the number of the optical splitters is increased, the burst digital signal packet is recovered from the burst optical signal in the data signal sent by each optical splitter, these digital signal packets are selected and combined into one channel of uplink data stream, and the uplink data stream is transported to the optical line terminal, so that the optical line terminal and the optical splitter are no longer in one-to-one correspondence, thereby increasing the number of the ONUs accessing the passive optical network system to a maximum extent. The communication method for the passive optical network provided in the embodiment of the present invention can cover more users without increasing the non-PON devices, thereby reducing the cost for network operation and maintenance of an operator.

In order to enable persons skilled in the art to understand the technical solution according to the embodiment of the present invention more clearly, a communication method for a passive optical network according to another embodiment of the present invention is illustrated in detail below by using a specific embodiment.

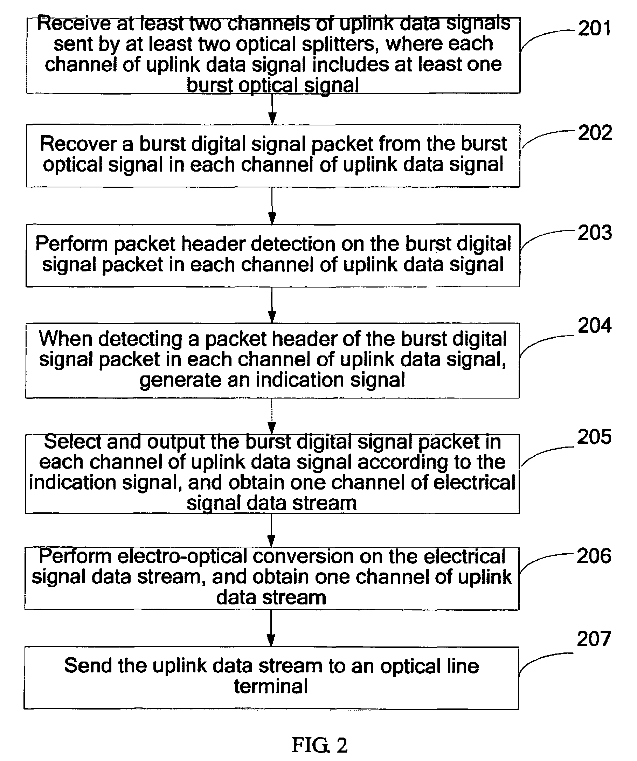

Referring to FIG 2, another embodiment of the present invention provides a communication method for a passive optical network, including:
Step 201: Receive at least two channels of uplink data signals sent by at least two optical splitters, where each channel of uplink data signal includes at least one burst optical signal.
Step 202: Recover a burst digital signal packet from the burst optical signal in each channel of uplink data signal.

In the embodiment of the present invention, in an uplink direction, each burst optical signal is first converted into a corresponding burst electrical signal, and a corresponding burst digital signal packet is recovered from each burst electrical signal according to a predesignated reference clock. The predesignated reference clock is synchronous with a reference clock corresponding to a downlink data stream.
Step 203: Perform packet header detection on the burst digital signal packet in each channel of uplink data signal.

In the embodiment of the present invention, each channel of uplink data signal corresponds to one packet header detecting module, and each packet header detecting module performs the packet header detection on the burst digital signal packet in the received uplink data signal.
Step 204: When detecting the packet header of the burst digital signal packet in each channel of uplink data signal, generate an indication signal.
Step 205: Select and output the burst digital signal packet in each channel of uplink data signal according to the indication signal, and obtain one channel of electrical signal data stream, where the electrical signal data stream includes the selected at least one burst digital signal packet.

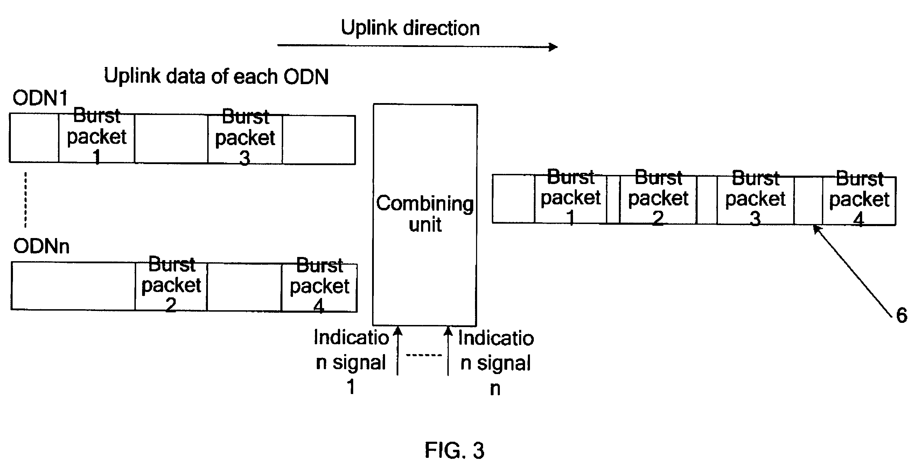

In the embodiment of the present invention, when one of the packet header detecting modules detects a packet header of a certain burst digital signal packet, an indication signal is generated, and a combining unit is prompted to select and output the burst digital signal packet. Meanwhile, it is already ensured in the prior art that no conflict may occur between burst digital signal packets in different uplink data signals of a same PON system, that is, packet headers of two burst digital signal packets are not detected at the same time. In this way, one channel of electrical signal data stream is obtained, and the data stream includes the burst digital signal packets in different uplink data signals. This process is as shown in FIG. 3, where 6 represents an invalid signal in the electrical signal data stream.
Step 206: Perform electro-optical conversion on the electrical signal data stream, and obtain one channel of uplink data stream.

In the embodiment of the present invention, the electrical signal data stream is converted into an optical signal, and the one channel of uplink data stream that can be received by an optical line terminal is obtained eventually.
Step 207: Send the uplink data stream to the optical line terminal.

Up to now, receiving and processing of uplink data by the PON system are completed.

In a downlink direction, a downlink data stream sent by the optical line terminal is received, and a corresponding data reference clock is recovered from the downlink data stream (a function of the data reference clock is recovering a corresponding burst digital signal packet from each burst electrical signal according to the reference clock in step 202), the downlink data stream is replicated according to the number of the optical splitters, that is, how many optical splitters there are, how many copies are replicated, and send each of them to each optical splitter, to ensure that different ONUs in different ODN networks receive the same downlink data streams.

It should be noted that, the embodiment of the present invention may be specifically applied to a long-reach PON system. A specific implementing method is similar to that of the foregoing embodiment, and a difference lies in that, after one channel of electrical signal data stream is obtained in step 205, inter-packet gap delimitation is performed between two adjacent burst digital signal packets in the data stream, that is, a start position of the next burst packet in the data stream is found in a manner of bit frame search, and an operation of an inter-packet gap byte rounding function is implemented, to convert the electrical signal data stream into a group of continuous digital signals. Meanwhile, to avoid emergence of a long stream of 0 or a long stream of 1 in the continuous digital signals, a fixed pattern needs to be filled between two adjacent burst packets, and the pattern is a preset sequence of some special characters. By performing the foregoing operations of the inter-packet gap delimitation and the inter-packet gap filling, the electrical signal data stream is converted into continuous signals, the continuous signals serve as client signals of a wavelength division system (device) and are transmitted through an optical transport network (or a wavelength division multiplexing network) to another wavelength division device connected to the optical line terminal, and the continuous signals are demapped by the wavelength division device and are sent to the optical line terminal through an optical fiber link.

According to the communication method for the passive optical network provided in the embodiment of the present invention, the number of the optical splitters is increased, in the uplink direction, the burst digital signal packet is recovered from the burst optical signal in the data signal sent by each optical splitter, these digital signal packets are selected and combined into one channel of uplink data stream, and the uplink data stream is transported to the optical line terminal; while in the downlink direction, the data stream received by the optical line terminal is replicated and sent to each optical splitter, so that the optical line terminal and the optical splitter are no longer in one-to-one correspondence, thereby increasing the number of the ONUs accessing the passive optical network system to a maximum extent. The communication method for the passive optical network provided in the embodiment of the present invention can cover more users without increasing non-PON devices, thereby reducing the cost for network operation and maintenance of an operator.

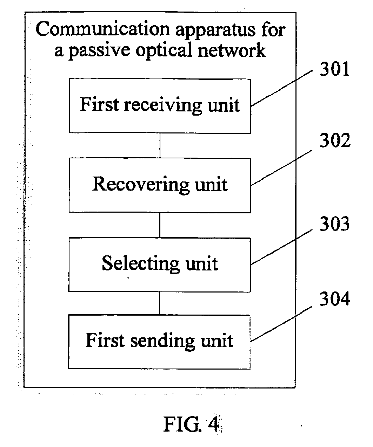

Referring to FIG. 4, an embodiment of the present invention provides a communication apparatus for a passive optical network, including:
a first receiving unit 301, configured to receive at least two channels of uplink data signals sent by at least two optical splitters, where each channel of uplink data signal includes at least one burst optical signal;
a recovering unit 302, configured to recover a burst digital signal packet from the burst optical signal in each channel of uplink data signal received by the first receiving unit 301;
a selecting unit 303, configured to select the burst digital signal packet recovered by the recovering unit 302 and obtain one channel of uplink data stream; and
a first sending unit 304, configured to send the one channel of uplink data stream output by the selecting unit 303 to an optical line terminal.

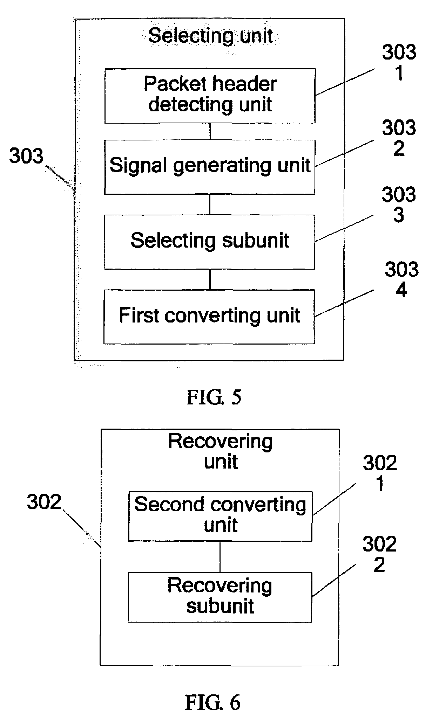

Based on FIG. 4, further as shown in FIG 5, the selecting unit 303 includes:
a packet header detecting unit 3031, configured to perform packet header detection on the burst digital signal packet in each channel of uplink data signal recovered by the recovering unit 302;
a signal generating unit 3032, configured to, when the packet header detecting unit 3031 detects a packet header of the burst digital signal packet in each channel of uplink data signal, generate an indication signal;
a selecting subunit 3033, configured to select and output the burst digital signal packet in each channel of uplink data signal according to the indication signal generated by the signal generating unit 3032, and obtain one channel of electrical signal data stream; and
a first converting unit 3034, configured to perform electro-optical conversion on the electrical signal data stream selected by the selecting subunit 3033, and obtain the one channel of uplink data stream.

Based on FIG. 4, further as shown in FIG 6, the recovering unit 302 includes:
a second converting unit 3021, configured to convert the burst optical signal into a burst electrical signal; and
a recovering subunit 3022, configured to recover the burst digital signal packet from the burst electrical signal obtained by the second converting unit 3021 according to a predesignated reference clock.

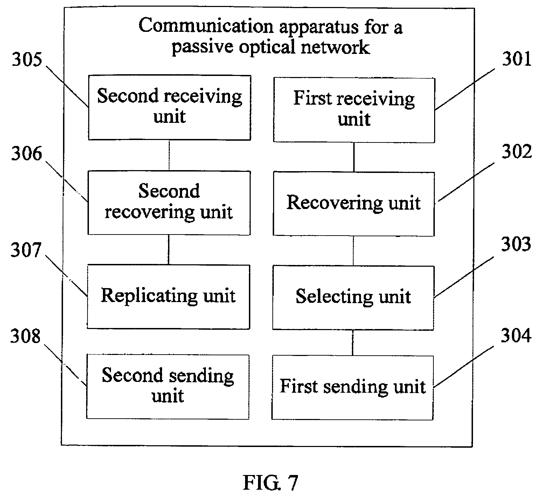

Based on FIG. 4, further as shown in FIG. 7, the apparatus further includes:
a second receiving unit 305, configured to receive one channel of downlink data stream sent by the optical line terminal;
a second recovering unit 306, configured to recover a data reference clock corresponding to the downlink data stream from the downlink data stream received by the second receiving unit 305;
a replicating unit 307, configured to replicate the downlink data stream received by the second receiving unit 305 according to the number of the optical splitters; and
a second sending unit 308, configured to send a downlink data stream replicated by the replicating unit 307 to the at least two optical splitters.

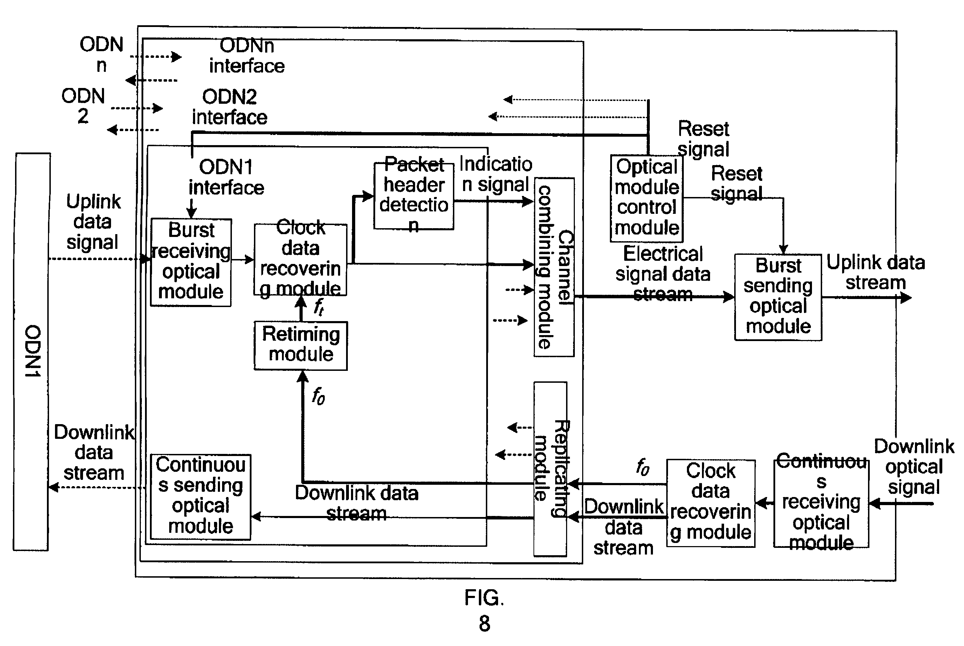

In the embodiment of the present invention, a structural diagram of physical modules corresponding to the foregoing units is as shown in FIG. 8. The number of ODN interfaces is the same as the number of the optical splitters (that is, the number of ODN networks), and assume that there are n ODN networks, correspondingly, n ODN interfaces are needed. Taking an ODN1 as an example, a burst receiving optical module receives one channel of uplink data signal, where the uplink data signal includes a burst optical signal sent by each ONU, convert it into a burst electrical signal by opto-electronic conversion, and sends the burst electrical signal to a clock data recovering module (because they are burst signals, the clock data recovering module is also referred to as a clock data recovering module in a burst mode); and the clock data recovering module recovers an uplink burst digital signal packet. A reference clock *fₜ* of the clock data recovering module is synchronous with a reference clock *fₒ* corresponding to the downlink data stream, where a retiming module is used to synchronize *fₜ* with *fₒ.*

The packet header detecting module performs the packet header detection on the burst digital signal packet recovered from the clock data recovering module, and after detecting the packet header, the packet header detecting module generates an indication signal and sends the indication signal to a channel combining module to indicate that the ODN interface receives uplink data. The channel combining module selects the burst digital signal packets at different ODN interfaces according to the indication signals sent by different ODN interfaces, and combines the uplink data signals at different ODN interfaces into one channel of electrical signal data stream. For example, as shown in FIG 3, when the indication signal 1 is valid, the channel combining module selects the uplink data signal of the ODN1 as an output, and because the same PON system ensures that no conflict occurs to the burst digital signal packets sent by different ONUs, the channel combining module only needs to output the uplink data signal at the ODN1 interface when the indication signal is valid, thereby implementing a function of channel combining on uplink data signals at different ODN interfaces belonging to the same PON system. A burst sending optical module performs electro-optical conversion on the received electrical signal data stream, and obtains the one channel of uplink data stream that can eventually be received by the optical line terminal. Further, in FIG. 8, an optical module control module is configured to generate a reset signal, and perform a reset operation on the burst sending optical module and the burst receiving optical module; and a continuous receiving optical module is configured to receive a downlink optical signal, convert it into an electrical signal, and send the electrical signal to the clock data recovering module, and the clock data recovering module recovers the downlink data stream and the reference clock *fₒ* of data in the downlink data stream.

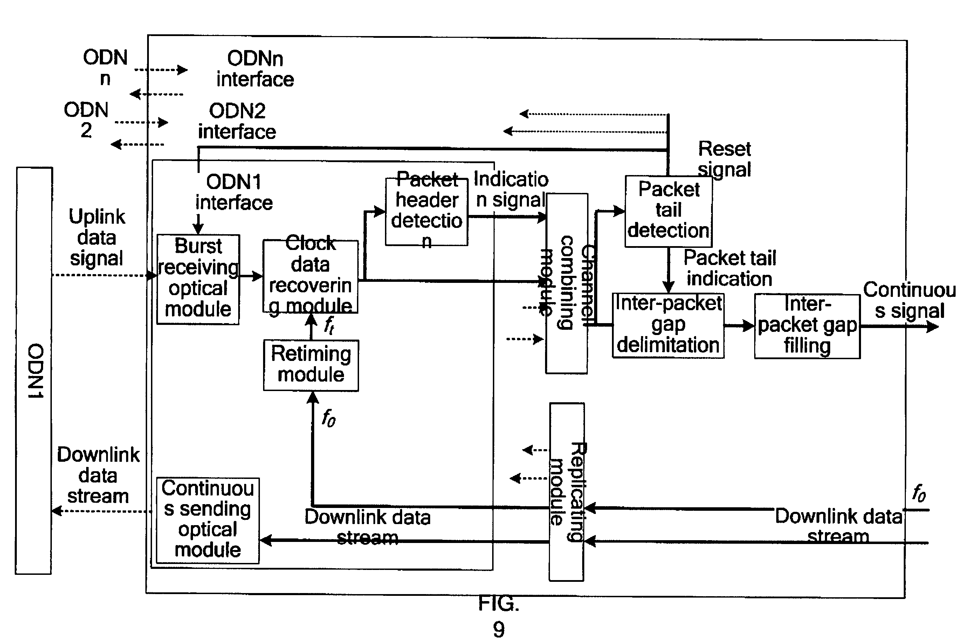

When the apparatus is specifically applied to the long-reach PON system, a structural diagram of the physical modules is as shown in FIG. 9.

The foregoing signal processing method is the same as that in the foregoing embodiment. After the channel combining module obtains one channel of electrical signal data stream, a packet tail detecting module adopts a burst packet tail detecting technology to detect the electrical signal data stream sent by the channel combining module, and when detecting an end position of each burst digital signal packet, generate a reset signal to reset the burst receiving optical modules at different ODN interfaces belonging to the same PON system. An inter-packet gap delimitating module finds a start position of the next burst digital signal packet in a manner of bit frame search, meanwhile completes an operation of an inter-packet gap byte rounding function, and converts the uplink data stream into continuous signals. Meanwhile, to avoid emergence of a long stream of 0 or a long stream of 1 in the continuous signals, an inter-packet gap filling module fills a fixed pattern in a gap between two adjacent burst data packets, where the fixed pattern is a sequence of some special characters. By performing the foregoing operations of the inter-packet gap delimitation and the inter-packet gap filling, the electrical signal data stream is converted into continuous signals, the continuous signals serve as client signals of a wavelength division system (device) and are transmitted through an optical transport network (or a wavelength division multiplexing network) to another wavelength division device connected to the optical line terminal, and the continuous signals are demapped by the wavelength division device and are sent to the optical line terminal.

In a downlink direction, the replicating module replicates the downlink data stream and sends replicated downlink data stream to different ODN interfaces belonging to a same PON. As shown in FIG. 8 or FIG 9, a continuous sending optical module in the ODN interface converts the received electrical signal into an optical signal and sends the optical signal to each ONU through an optical fiber link, to ensure that each ONU receives the same downlink data stream. In the figure, *fₒ* represents the data reference clock recovered from the downlink data stream, *fₜ* represents the reference clock adopted to recover the corresponding burst digital signal packet from each burst electrical signal in an uplink direction, and the retiming module is used to synchronize *fₒ* with *fₜ.*

The physical modules in FIG. 9 are corresponding to the units in the communication apparatus for the passive optical network. For example, in the uplink direction, the burst receiving optical module corresponds to the first receiving unit 301 and the second converting unit 3021, the clock data recovering module corresponds to the recovering subunit 3022, the packet header detecting module corresponds to the packet header detecting unit 3031 and the signal generating unit 3032, and the channel combining module corresponds to the selecting subunit 3033; while in the downlink direction, the replicating module corresponds to the second receiving unit 305, the second recovering unit 306, the replicating unit 307 and the second sending unit 308.

According to the communication apparatus for the passive optical network provided in the embodiment of the present invention, the number of the optical splitters is increased, in the uplink direction, the burst digital signal packet is recovered from the burst optical signal in the data signal sent by each optical splitter, these digital signal packets are selected and combined into one channel of uplink data stream, and the uplink data stream is transported to the optical line terminal; while in the downlink direction, the data stream received by the optical line terminal is replicated and sent to each optical splitter, so that the optical line terminal and the optical splitter are no longer in one-to-one correspondence, thereby increasing the number of the ONUs accessing the passive optical network system to a maximum extent. The communication apparatus for the passive optical network provided in the embodiment of the present invention can cover more users without increasing non-PON devices, thereby reducing the cost for network operation and maintenance of an operator.

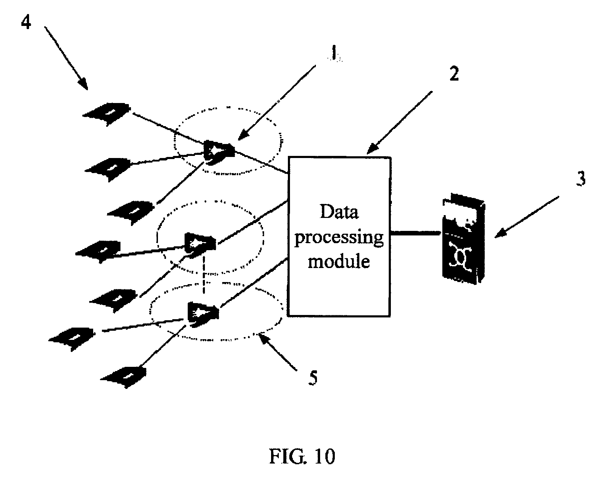

As shown in FIG 10, an embodiment of the present invention further provides a communication system for a passive optical network, including:
at least two optical splitters 1, where each optical splitter is connected to at least one optical network unit 4, and configured to receive burst optical signals sent by the optical network unit 4 and combine the burst optical signals into one channel of uplink data signal;
a data processing module 2, connected to the at least two optical splitters, and configured to receive at least two channels of uplink data signals sent by the at least two optical splitters; recover a burst digital signal packet from a burst optical signal in each channel of uplink data signal; select the burst digital signal packet and obtain one channel of uplink data stream; and send the uplink data stream to an optical line terminal; and
an optical line terminal 3, connected to the data processing module 2, and configured to receive the one channel of uplink data stream sent by the data processing module 2, parse the uplink data stream, and send a parsed uplink data stream to a target network.

In a downlink direction, the data processing module 2 receives one channel of downlink data stream sent by the optical line terminal, and recovers a reference clock of data in the downlink data stream from it (that is, recovers a corresponding burst digital signal packet from each burst electrical signal according to the reference clock in the uplink direction), replicates the downlink data stream according to the number of the optical splitters 1, that is, how many optical splitters there are, how many copies are replicated, and sends each of them to each optical splitter, to ensure that different ONUs in different ODN networks 5 (networks formed by optical splitters and optical fibers connected to the optical splitters) receive the same downlink data streams.

According to the communication system for the passive optical network provided in the embodiment of the present invention, the number of the optical splitters is increased, the burst digital signal packet is recovered from the burst optical signal in the data signal sent by each optical splitter, these digital signal packets are selected and combined into one channel of uplink data stream, and the uplink data stream is transported to the optical line terminal, so that the optical line terminal and the optical splitter are no longer in one-to-one correspondence, thereby increasing the number of the ONUs accessing the passive optical network system to a maximum extent. The communication system for the passive optical network provided in the embodiment of the present invention can cover more users without increasing non-PON devices, thereby reducing the cost for network operation and maintenance of an operator.

The technical solutions provided in the present invention are applicable to the communication field of the passive optical network system.

Persons of ordinary skill in the art may understand that all or part of the steps of the method according to the embodiments of the present invention may be implemented by a program instructing relevant hardware. The program may be stored in a computer readable storage medium, such as a ROM/RAM, a magnetic disk, or a compact disk, and so on.

The foregoing descriptions are merely implementation manners of the present invention, but not intended to limit the present invention. Any variation or replacement that may be easily thought of by persons skilled in the art without departing from the technical scope disclosed in the present invention shall fall within the protection scope of the present invention. Therefore, the protection scope of the present invention is subject to the protection scope of the claims.

## Claims

1. A communication method for a passive optical network, comprising:
receiving at least two channels of uplink data signals sent by at least two optical splitters, wherein each channel of uplink data signal comprises at least one burst optical signal (101, 201);
recovering a burst digital signal packet from the burst optical signal in each channel of uplink data signal (102);
selecting the burst digital signal packet and obtaining one channel of uplink data stream (103); and
sending the uplink data stream to an optical line terminal (104);
**characterized in that**
the selecting the burst digital signal packet and obtaining the one channel of uplink data stream comprises:
performing packet header detection on the burst digital signal packet in each channel of uplink data signal (203);
when detecting a packet header of the burst digital signal packet in each channel of uplink data signal, generating an indication signal (204);
selecting and outputting the burst digital signal packet in each channel of uplink data signal according to the indication signal, and obtaining one channel of electrical signal data stream (205), wherein the electrical signal data stream includes the selected at least one burst digital signal packet; and
performing electro-optical conversion on the electrical signal data stream, and obtaining the one channel of uplink data stream (206)..

2. The communication method for the passive optical network according to claim 1,
wherein the recovering the burst digital signal packet from the burst optical signal in each channel of uplink data signal comprises:
converting the burst optical signal into a burst electrical signal; and
recovering the burst digital signal packet from the burst electrical signal according to a predesignated reference clock (202).

3. The communication method for the passive optical network according to claim 1, further comprising:
receiving one channel of downlink data stream sent by the optical line terminal;
recovering a reference clock of data in the downlink data stream from the downlink data stream;
replicating the downlink data stream according to the number of the optical splitters; and
sending replicated downlink data streams to the at least two optical splitters.

4. A communication apparatus for a passive optical network, comprising:
a first receiving unit (301), configured to receive at least two channels of uplink data signals, wherein each channel of uplink data signal comprises at least one burst optical signal;
a recovering unit (302), configured to recover a burst digital signal packet from the burst optical signal in each channel of uplink data signal received by the first receiving unit;
a selecting unit (303), configured to select the burst digital signal packet recovered by the recovering unit and obtain one channel of uplink data stream; and
a first sending unit (304), configured to send the one channel of uplink data stream output by the selecting unit to an optical line terminal;
**characterized in that**
the selecting unit comprises:
a packet header detecting unit (3031), configured to perform packet header detection on the burst digital signal packet in each channel of uplink data signal recovered by the recovering unit;
a signal generating unit (3032), configured to, when the packet header detecting unit detects a packet header of the burst digital signal packet in each channel of uplink data signal, generate an indication signal;
a selecting subunit (3033), configured to select and output the burst digital signal packet in each channel of uplink data signal according to the indication signal generated by the signal generating unit, and obtain one channel of electrical signal data stream; and
a first converting unit (3034), configured to perform electro-optical conversion on the electrical signal data stream selected by the selecting subunit, and obtain the one channel of uplink data stream.

5. The communication apparatus for the passive optical network according to claim 4, wherein the recovering unit comprises:
a second converting unit(3021), configured to convert the burst optical signal into a burst electrical signal; and
a recovering subunit (3022), configured to recover the burst digital signal packet from the burst electrical signal obtained by the second converting unit according to a predesignated reference clock.

6. The communication apparatus for the passive optical network according to claim 4, further comprising:
a second receiving unit (305), configured to receive one channel of downlink data stream sent by the optical line terminal;
a second recovering unit (306), configured to recover a reference clock of data in the downlink data stream from the downlink data stream received by the second receiving unit;
a replicating unit (307), configured to replicate the downlink data stream received by the second receiving unit; and
a second sending unit (308), configured to send downlink data streams replicated by the replicating unit.

7. A communication system for a passive optical network, comprising:
at least two optical splitters (1, 5), wherein each optical splitter is connected to at least one optical network unit (4), and configured to receive burst optical signals sent by the optical network unit (4)and combine the burst optical signals into one channel of uplink data signal;
**characterized in that**
a data processing module (2), connected to the at least two optical splitters (1,5), and configured to receive at least two channels of uplink data signals sent by the at least two optical splitters (1,5); recover a burst digital signal packet from a burst optical signal in each channel of uplink data signal; select the burst digital signal packet and obtain one channel of uplink data stream; and send the uplink data stream to an optical line terminal (3), wherein the selecting the burst digital signal packet and obtaining the one channel of uplink data stream comprises:
performing packet header detection on the burst digital signal packet in each channel of uplink data signal; when detecting a packet header of the burst digital signal packet in each channel of uplink data signal, generating an indication signal; selecting and outputting the burst digital signal packet in each channel of uplink data signal according to the indication signal, and obtaining one channel of electrical signal data stream, wherein the electrical signal data stream includes the selected at least one burst digital signal packet; and performing electro-optical conversion on the electrical signal data stream, and obtaining the one channel of uplink data stream; and
the optical line terminal (3), connected to the data processing module (2), and configured to receive the one channel of uplink data stream sent by the data processing module (2), parse the uplink data stream, and send a parsed uplink data stream to a target network.

8. The communication system for the passive optical network according to claim 7, wherein the data processing module is further configured to:
receive one channel of downlink data stream sent by the optical line terminal;
recover a reference clock of data in the downlink data stream from the downlink data stream;
replicate the downlink data stream according to the number of the optical splitters; and send replicated downlink data streams to the at least two optical splitters.

## Patentansprüche

1. Kommunikationsverfahren für ein passives optisches Netzwerk, umfassend:
Empfangen von mindestens zwei Kanälen von Aufwärtsstrecken-Datensignalen, die durch mindestens zwei optische Splitter gesendet werden, wobei jeder Kanal des Aufwärtsstrecken-Datensignals mindestens ein optisches Burstsignal (101, 201) umfasst;
Wiederherstellen eines digitalen Burstsignalpakets aus dem optischen Burstsignal in jedem Kanal des Aufwärtsstrecken-Datensignals (102);
Auswählen des digitalen Burstsignalpakets und Erhalten eines Kanals des Aufwärtsstrecken-Datenstroms (103); und
Senden des Aufwärtsstrecken-Datenstroms zu einem optischen Leitungsterminal (104);
**dadurch gekennzeichnet, dass**
das Auswählen des digitalen Burstsignalpakets und Erhalten des einen Kanals des Aufwärtsstrecken-Datenstroms Folgendes umfasst:
Ausführen von Paketheaderdetektion an dem digitalen Burstsignalpaket in jedem Kanal des Aufwärtsstrecken-Datensignals (203);
Erzeugen eines Indikationssignals (204) beim Detektieren eines Paketheaders des digitalen Burstsignalpakets in jedem Kanal des Aufwärtsstrecken-Datensignals;
Auswählen und Ausgeben des digitalen Burstsignalpakets in jedem Kanal des Aufwärtsstrecken-Datensignals gemäß dem Indikationssignal und Erhalten eines Kanals des elektrischen Signaldatenstroms (205), wobei der elektrische Signaldatenstrom das ausgewählte mindestens eine digitale Burstsignalpaket umfasst; und
Ausführen von Umsetzung von elektrisch in optisch an dem elektrischen Signaldatenstrom und Erhalten des einen Kanals des Aufwärtsstrecken-Datenstroms (206).

2. Kommunikationsverfahren für ein passives optisches Netzwerk nach Anspruch 1, wobei das Wiederherstellen des digitalen Burstsignalpakets aus dem optischen Burstsignal in jedem Kanal des Aufwärtsstrecken-Datensignals Folgendes umfasst:
Umsetzen des optischen Burstsignals in ein elektrisches Burstsignal; und
Wiederherstellen des digitalen Burstsignalpakets aus dem elektrischen Burstsignal gemäß einem im Voraus festgelegten Referenztakt (202).

3. Kommunikationsverfahren für ein passives optisches Netzwerk nach Anspruch 1, ferner umfassend:
Empfangen eines Kanals des Abwärtsstrecken-Datenstroms, der durch das optische Leitungsterminal gesendet wird;
Wiederherstellen eines Referenztakts von Daten in dem Abwärtsstrecken-Datenstrom aus dem Abwärtsstrecken-Datenstrom;
Replizieren des Abwärtsstrecken-Datenstroms gemäß der Anzahl der optischen Splitter; und
Senden replizierter Abwärtsstrecken-Datenströme zu den mindestens zwei optischen Splittern.

4. Kommunikationsvorrichtung für ein passives optisches Netzwerk, umfassend:
eine erste Empfangseinheit (301), ausgelegt zum Empfangen von mindestens zwei Kanälen von Aufwärtsstrecken-Datensignalen, wobei jeder Kanal des Aufwärtsstrecken-Datensignals mindestens ein optisches Burstsignal umfasst;
eine Wiederherstellungseinheit (302), ausgelegt zum Wiederherstellen eines digitalen Burstsignalpakets aus dem optischen Burstsignal in jedem Kanal des Aufwärtsstrecken-Datensignals der durch die erste Empfangseinheit erhalten wird;
eine Auswahleinheit (303), ausgelegt zum Auswählen des durch die Wiederherstellungseinheit wiederhergestellten digitalen Burstsignalpakets und Erhalten eines Kanals des Aufwärtsstrecken-Datenstroms; und
eine erste Sendeeinheit (304), ausgelegt zum Senden des einen Kanals des Aufwärtsstrecken-Datenstroms, der durch die Auswahleinheit ausgegeben wird, zu einem optischen Leitungsterminal
**dadurch gekennzeichnet, dass**
die Auswahleinheit Folgendes umfasst:
eine Paketheader-Detektionseinheit (3031), ausgelegt zum Ausführen von Paketheaderdetektion an dem durch die Wiederherstellungseinheit wiederhergestellten digitalen Burstsignalpaket in jedem Kanal des Aufwärtsstrecken-Datensignals;
eine Signalerzeugungseinheit (3032), ausgelegt zum Erzeugen eines Indikationssignals beim Detektieren durch die Paketheader-Detektionseinheit eines Paketheaders des digitalen Burstsignalpakets in jedem Kanal des Aufwärtsstrecken-Datensignals;
eine Auswahlsubeinheit (3033), ausgelegt zum Auswählen und Ausgeben des digitalen Burstsignalpakets in jedem Kanal des Aufwärtsstrecken-Datensignals gemäß dem durch die Signalerzeugungeinheit erzeugten Indikationssignal und Erhalten eines Kanals des elektrischen Signaldatenstroms (205); und
eine erste Umsetzungseinheit (3034), ausgelegt zum Ausführen von Umsetzung von elektrisch in optisch an dem durch die Auswahleinheit ausgewählten elektrischen Signaldatenstrom und Erhalten des einen Kanals des Aufwärtsstrecken-Datenstroms

5. Kommunikationsvorrichtung für ein passives optisches Netzwerk nach Anspruch 4, wobei die Wiederherstellungseinheit Folgendes umfasst:
eine zweite Umsetzungseinheit (3021), ausgelegt zum Umsetzen des optischen Burstsignals in ein elektrisches Burstsignal; und
eine Wiederherstellungssubeinheit (3022), ausgelegt zum Wiederherstellen des digitalen Burstsignalpakets aus dem durch die zweite Umsetzungseinheit erhaltenen elektrischen Burstsignal gemäß einem im Voraus festgelegten Referenztakt.

6. Kommunikationsvorrichtung für ein passives optisches Netzwerk nach Anspruch 4, ferner umfassend:
eine zweite Empfangseinheit (305), ausgelegt zum Empfangen eines Kanals des Abwärtsstrecken-Datenstroms, der durch das optische Leitungsterminal gesendet wird;
eine zweite Wiederherstellungseinheit (306), ausgelegt zum Wiederherstellen eines Referenztakts von Daten in dem Abwärtsstrecken-Datenstrom aus dem durch die zweite Empfangseinheit empfangenen Abwärtsstrecken-Datenstrom;
eine Repliziereinheit (307), ausgelegt zum Replizieren des durch die zweite Empfangseinheit empfangenen Abwärtsstrecken-Datenstroms; und
eine zweite Sendeeinheit (308), ausgelegt zum Senden von durch die Repliziereinheit replizierten Abwärtsstrecken-Datenströmen.

7. Kommunikationssystem für ein passives optischen Netzwerk, umfassend:
mindestens zwei optische Splitter (1, 5), wobei jeder optische Splitter mit mindestens einer optischen Netzwerkeinheit (4) verbunden ist und ausgelegt ist zum Empfangen von durch die optischen Netzwerkeinheit (4) gesendeten optischen Burstsignalen und Kombinieren der optischen Burstsignale zu einem Kanal des Aufwärtsstrecken-Datensignals;
**dadurch gekennzeichnet dass**
ein Datenverarbeitungsmodul (2), das mit den mindestens zwei optischen Splittern (1, 5) verbunden ist, zum Empfangen von mindestens zwei Kanälen von Aufwärtsstrecken-Datensignalen, die durch die mindestens zwei optischen Splitter (1, 5) gesendet werden, ausgelegt ist; Wiederherstellen eines digitalen Burstsignalpakets aus einem optischen Burstsignal in jedem Kanal des Aufwärtsstrecken-Datensignals; Auswählen des digitalen Burstsignalpakets und
Erhalten eines Kanals des Aufwärtsstrecken-Datenstroms; und Senden des Aufwärtsstrecken-Datenstroms zu einem optischen Leitungsterminal (3), wobei das Auswählen des digitalen Burstsignalpakets und Erhalten des einen Kanals des Aufwärtsstrecken-Datenstroms Folgendes umfasst:
Ausführen von Paketheaderdetektion an dem digitalen Burstsignalpaket in jedem Kanal des Aufwärtsstrecken-Datensignals; Erzeugen eines Indikationssignals beim Detektieren eines Paketheaders des digitalen Burstsignalpakets in jedem Kanal des Aufwärtsstrecken-Datensignals; Auswählen und Ausgeben des digitalen Burstsignalpakets in jedem Kanal des Aufwärtsstrecken-Datensignals gemäß dem Indikationssignal und Erhalten eines Kanals des elektrischen Signaldatenstroms (205), wobei der elektrische Signaldatenstrom das ausgewählte mindestens eine digitale Burstsignalpaket umfasst; und Ausführen von Umsetzung von elektrisch in optisch an dem elektrischen Signaldatenstrom und Erhalten des einen Kanals des Aufwärtsstrecken-Datenstroms; und
das optische Leitungsterminal (3), das mit dem Datenverarbeitungsmodul (2) verbunden ist, zum Empfangen des einen Kanals des Aufwärtsstrecken-Datenstroms, der durch das Datenverarbeitungsmodul (2) gesendet wird, Analysieren des Aufwärtsstrecken-Datenstroms und Senden eines analysierten Aufwärtsstrecken-Datenstroms zu einem Zielnetzwerk ausgelegt ist.

8. Kommunikationssystem für das passive optische Netzwerk nach Anspruch 7, wobei das Datenverarbeitungsmodul ferner ausgelegt ist zum
Empfangen eines Kanals des Abwärtsstrecken-Datenstroms, der durch das optische Leitungsterminal gesendet wird;
Wiederherstellen eines Referenztakts von Daten in dem Abwärtsstrecken-Datenstrom aus dem Abwärtsstrecken-Datenstrom;
Replizieren des Abwärtsstrecken-Datenstroms gemäß der Anzahl optischer Splitter; und
Senden replizierter Abwärtsstrecken-Datenströme zu den mindestens zwei optischen Splittern.

## Revendications

1. Procédé de communication pour un réseau optique passif, comprenant :
la réception d'au moins deux canaux de signaux de données de liaison montante envoyés par au moins deux séparateurs optiques, chaque canal de signal de données de liaison montante comprenant au moins un signal optique en salve (101, 201) ;
la récupération d'un paquet de signal numérique en salve à partir du signal optique en salve dans chaque canal du signal de données de liaison montante (102) ;
la sélection du paquet de signal numérique en salve et la récupération d'un canal de flux de données de liaison montante (103) ; et
l'envoi du flux de données de liaison montante vers un terminal optique en ligne (104) ;
**caractérisé en ce que**
la sélection du paquet de signal numérique et la récupération du canal de flux de données de liaison montante comprennent :
l'exécution de la détection d'un en-tête de paquet sur le paquet de signal numérique en salve dans chaque canal de signal de données de liaison montante (203) ;
à la détection d'un en-tête de paquet appartenant au paquet de signal numérique en salve dans chaque canal de signal de données de liaison montante, la génération d'un signal d'indication (204) ;
la sélection et la fourniture en sortie du paquet de signal numérique en salve dans chaque canal de signal de données de liaison montante en fonction du signal d'indication, et la récupération d'un canal de flux de données de signal électrique (205), le flux de données de signal électrique incluant le ou les paquets de signaux numériques en salve sélectionné(s) ; et
l'exécution d'une conversion électro-optique sur le flux de données de signal électrique et la récupération du canal de flux de données de liaison montante (206).

2. Procédé de communication pour un réseau optique passif selon la revendication 1, dans lequel la récupération du paquet de signal numérique en salve à partir du signal optique en salve dans chaque canal de signal de données de liaison montante comprend :
la conversion du signal optique en salve en un signal électrique en salve ; et
la récupération du paquet de signal numérique en salve à partir du signal électrique en salve en fonction d'une horloge de référence (202) désignée à l'avance.

3. Procédé de communication pour un réseau optique passif selon la revendication 1, comprenant en outre :
la réception d'un canal de flux de données de liaison descendante envoyé par le terminal optique en ligne ;
la récupération d'une horloge de référence de données dans le flux de données de liaison descendante à partir du flux de données de liaison descendante ;
la reproduction du flux de données de liaison descendante en fonction du nombre de séparateurs optiques ; et
l'envoi des flux de données de liaison descendante reproduits aux deux séparateurs optiques ou plus.

4. Appareil de communication pour un réseau optique passif, comprenant :
une première unité de réception (301) configurée pour recevoir au moins deux canaux de signaux de données de liaison montante, chaque canal de signal de données de liaison montante comprenant au moins un signal optique en salve ;
une unité de récupération (302) configurée pour récupérer un paquet de signal numérique en salve à partir du signal optique en salve dans chaque canal de signal de données de liaison montante reçu par la première unité de réception ;
une unité de sélection (303) configurée pour sélectionner le paquet de signal numérique en salve obtenu par l'unité de récupération et pour récupérer un canal de flux de données de liaison montante ; et
une première unité d'envoi (304) configurée pour envoyer le canal de flux de données de liaison montante fourni en sortie par l'unité de sélection à un terminal optique en ligne;
**caractérisé en ce que**
l'unité de sélection comprend :
une unité de détection d'en-tête de paquet (3031) configurée pour effectuer une détection d'en-tête de paquet sur le paquet de signal numérique en salve dans chaque canal de signal de données de liaison montante récupéré par l'unité de récupération ;
une unité de génération de signal (3032) configurée pour générer un signal d'indication lorsque l'unité de détection d'en-tête de paquet détecte un en-tête de paquet appartenant au paquet de signal numérique en salve dans chaque canal de signal de données de liaison montante ;
une sous-unité de sélection (3033) configurée pour sélectionner et fournir en sortie le paquet de signal numérique en salve dans chaque canal de signal de données de liaison montante en fonction du signal d'indication généré par l'unité de génération de signal, et pour récupérer un canal de flux de données de signal électrique ; et
une première unité de conversion (3034) configurée pour effectuer une conversion électro-optique sur le flux de données de signal électrique sélectionné par la sous-unité de sélection, et pour récupérer le canal de flux de données de liaison montante.

5. Appareil de communication pour un réseau optique passif selon la revendication 4, dans lequel l'unité de récupération comprend :
une seconde unité de conversion (3021) configurée pour convertir le signal optique en salve en un signal électrique en salve ; et
une sous-unité de récupération (3022) configurée pour récupérer le paquet de signal numérique en salve à partir du signal électrique en salve obtenu par la seconde unité de conversion en fonction d'une horloge de référence désignée à l'avance.

6. Appareil de communication pour un réseau optique passif selon la revendication 4, comprenant en outre :
une seconde unité de réception (305) configurée pour recevoir un canal de flux de données de liaison descendante envoyé par le terminal optique en ligne ;
une seconde unité de récupération (306) configurée pour récupérer une horloge de référence de données dans le flux de données de liaison descendante à partir du flux de données de liaison descendante reçu par la seconde unité de réception ;
une unité de reproduction (307) configurée pour reproduire le flux de données de liaison descendante reçu par la seconde unité de réception ; et
une seconde unité d'envoi (308) configurée pour envoyer des flux de données de liaison descendante reproduits par l'unité de reproduction.

7. Système de communications pour un réseau optique passif, comprenant :
au moins deux séparateurs optiques (1, 5), chaque séparateur optique étant relié à au moins une unité optique de réseau (4) et étant configuré pour recevoir des signaux optiques en salve envoyés par l'unité optique de réseau (4), et pour combiner les signaux optiques en salve en un canal de signal de données de liaison montante ;
**caractérisé en ce que**
un module de traitement de données (2) relié aux deux séparateurs optiques (1, 5) ou plus est configuré pour recevoir au moins deux canaux de signaux de données de liaison montante envoyés par les deux séparateurs optiques (1, 5) ou plus; pour récupérer un paquet de signal numérique en salve provenant d'un signal optique en salve dans chaque canal de signal de données de liaison montante ; pour sélectionner le paquet de signal numérique en salve et pour récupérer un canal de flux de données de liaison montante ; et pour envoyer le flux de données de liaison montante vers un terminal optique en ligne (3), la sélection du paquet de signal numérique en salve et
la récupération du canal de flux de données de liaison montante comprenant :
l'exécution de la détection d'un en-tête de paquet sur le paquet de signal numérique en salve dans chaque canal de signal de données de liaison montante ; la génération d'un signal d'indication à la détection d'un en-tête de paquet appartenant au paquet de signal numérique en salve dans chaque canal de signal de données de liaison montante ; la sélection et la fourniture en sortie du paquet de signal numérique en salve dans chaque canal de signal de données de liaison montante en fonction du signal d'indication, et la récupération d'un canal de flux de données de signal électrique, le flux de données de signal électrique incluant le ou les paquets de signaux numériques en salve sélectionné(s) ; et l'exécution d'une conversion électro-optique sur le flux de données de signal électrique, ainsi que la récupération du canal de flux de données de liaison montante ; et
le terminal optique en ligne (3) relié au module de traitement de données (2) est configuré pour recevoir le canal de flux de données de liaison montante envoyé par le module de traitement de données (2), pour analyser le flux de données de liaison montante et pour envoyer un flux de données de liaison montante analysé à un réseau cible.

8. Système de communication pour un réseau optique passif selon la revendication 7, dans lequel le module de traitement de données est en outre configuré pour :
recevoir un canal de flux de données de liaison descendante envoyé par le terminal optique en ligne ;
récupérer une horloge de référence de données dans le flux de données de liaison descendante à partir du flux de données de liaison descendante ;
reproduire le flux de données de liaison descendante en fonction du nombre de séparateurs optiques ; et envoyer les flux de données de liaison descendante reproduits aux deux séparateurs optiques ou plus.
